# EUROPEAN PATENT APPLICATION

(11) **EP 4 461 115 A1**
(43) Date of publication of application: **13.11.2024**
(21) Application number: 24171487.2
(22) Date of filing: 22.04.2024
(51) Int. Cl.: A01D 34/00, G01S 19/14, G01S 19/36, G05D 1/00

(54) **MOWING SYSTEM CAPABLE OF ENHANCING POSITIONING PRECISION**

(30) Priority: 12.05.2023 DE 202023102574 U
(71) Applicant: Durq Machinery Corp., Taichung City 429 (TW)
(72) Inventor: HUANG, Yu-Chia, 429 TAICHUNG CITY (TW); CHOU, Fu-Peng, 429 TAICHUNG CITY (TW)
(74) Representative: Straus, Alexander

(57) **Abstract**

A mowing system (10) includes a charging station (20), a base station (30), and a mowing robot (40). The base station (30) and the charging station (20) are set independently from each other. The base station (30) has a first communication unit (322) and a first GPS antenna (324). The mowing robot (40) has a second GPS antenna (44) and a control unit (46) electrically connected with the second GPS antenna (44) and wirelessly connected with the first GPS antenna (324), such that the control unit (46) receives a first GPS signal obtained by the first GPS antenna (324) and a second GPS signal obtained by the second GPS antenna (44) and determines a positioning coordinate of the mower robot (40) according to the first GPS signal and the second GPS signal. As such, the installation position of the base station (30) is not restricted by the surrounding environment or the charging station (20) so as to enhance positioning precision.

## Description

### BACKGROUND OF THE INVENTION

### 1. Field of the Invention

The present invention relates to mowing robots and more particularly, to a mowing system that can enhance its positioning precision.

### 2. Description of the Related Art

The utility model patent CN215345883U disclosed a lawn mower positioning system which includes a base station and a lawn mower main body. The base station has a first GPS module and a first communication module. The lawn mower main body has a second GPS module and a second communication module. The base station and the lawn mower main body establish communication connection through the first communication module and the second communication module. In addition, the lawn mower main body is further provided with a control device, and the control device is used for receiving a first GPS signal obtained by the first GPS module and a second GPS signal obtained by the second GPS module and determining positioning information of the lawn mower main body according to the first GPS signal and the second GPS signal.

However, in the aforesaid prior art, the first GPS module is set on the top end of an antenna mast, and the bottom end of the antenna mast is fixed to a charging device; that is to say, the installation position of the first GPS module is restricted to the charging device. This causes that the signal reliability between the first GPS module and the second GPS module is easily affected by the moving lawn mower main body, resulting in influencing positioning precision of the lawn mower main body.

### SUMMARY OF THE INVENTION

It is a primary objective of the present invention to provide a mowing system, which can enhance positioning precision.

To attain the above objective, the mowing system of the present invention comprises a charging station, a base station, and a mowing robot. The base station and the charging station are set independently from each other. The base station includes a first communication unit and a first GPS antenna. The mowing robot includes a second communication unit configured to establish a communication connection with the first communication unit of the base station. In addition, the mowing robot further includes a second GPS antenna and a control unit electrically connected with the second GPS antenna and the first GPS antenna so as to receive a first GPS signal obtained by the first GPS antenna and a second GPS signal obtained by the second GPS antenna and determine a positioning coordinate of the mower robot according to the first GPS signal and the second GPS signal.

It can be seen from the above that the base station and the charging station are set independently from each other, such that the installation position of the base station is not restricted by the surrounding environment or the charging station to provide better signal quality, thereby achieving a purpose of enhancing positioning precision.

Preferably, the base station further includes a microcontroller electrically connected with the first communication unit and the first GPS antenna, and a power supply unit electrically connected with the microcontroller. In this way, the microcontroller is used to control operation of the first communication unit and the first GPS antenna, and the power supply unit is used to supply power to the microcontroller, such that the base station can be set independently without relying on an external power supply.

Preferably, the base station further includes a stake and a base. The first GPS antenna is disposed to a top end of the stake, and the base is connected with a bottom end of the stake. In this way, the base station can be set in a less shaded position according to actual needs, so that the first GPS antenna can receive a signal with good quality to achieve an effect of enhancing positioning precision.

Preferably, the base has a tripod and a ground rod connected with the tripod. In this way, the tripod is used to provide a stable support and the ground rod is used to insert directly into the grass.

Preferably, the power supply unit is a solar power unit, including a solar panel exposed outside and a storage battery electrically connected with the solar panel and the microcontroller. In this way, the solar panel absorbs sunlight and converts the sunlight into electrical energy and stores the electrical energy in the storage battery that provides the electrical energy to the microcontroller.

Preferably, when the mowing robot moves to the charging station, the control unit determines whether the mowing robot is charging and determines whether the position of the mowing robot is within an error range.

Preferably, a wireless transmission method between the control unit and the first GPS antenna is LoRa, Zigbee, Wi-Fi, Bluetooth or a mobile communication network.

Other advantages and features of the present invention will be fully understood by reference to the following specification in conjunction with the accompanying drawings, in which like reference signs denote like components of structure.

### BRIEF DESCRIPTION OF THE DRAWINGS

FIG. 1 is a perspective view of the mowing system of the present invention.
FIG. 2 is a block diagram of the mowing system of the present invention.
FIG. 3 is a schematic drawing of the mowing system of the present invention, showing the GPS module is set on the roof.

### DETAILED DESCRIPTION OF THE INVENTION

First of all, it is to be mentioned that the directions used in the following embodiments and the appendix claims are based on the directions in the appendix drawings. Further, same or similar reference numerals used in the following embodiments and the appendix drawings designate same or similar elements or the structural features thereof.

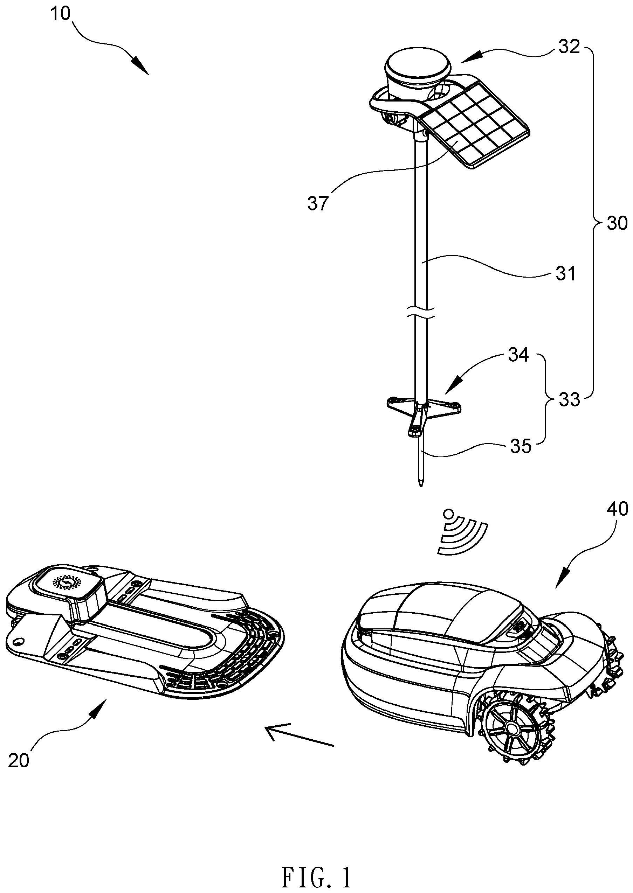

Referring to FIG. 1, a mowing system 10 of the present invention comprises a charging station 20, a base station 30, and a mowing robot 40.

The charging station 20 is installed on the ground and electrically connected with an external power supply (such as a household socket, not shown in FIGS.) for charging the mowing robot 40.

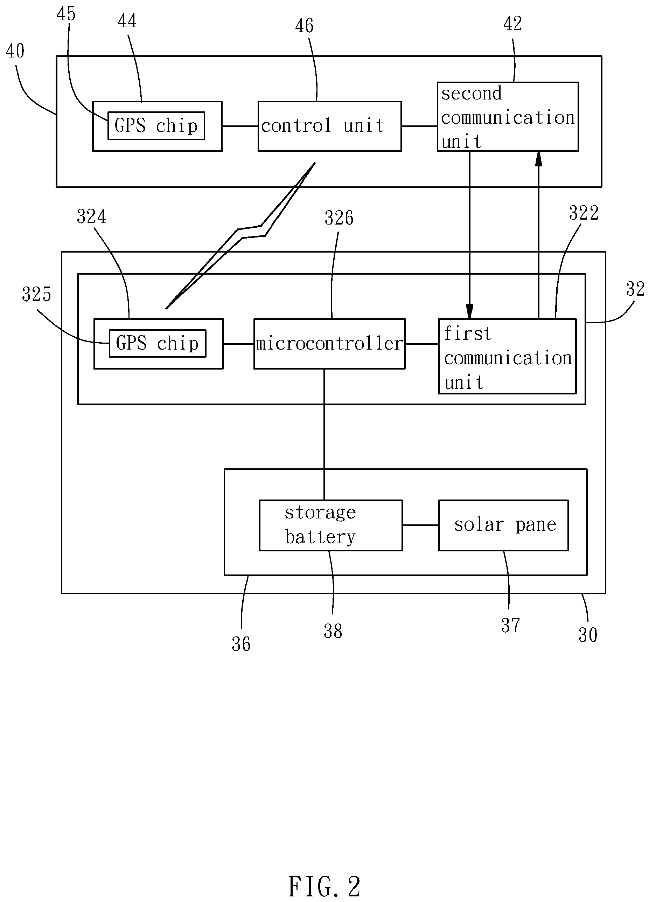

The base station 30 is set independently from the charging station 20, i.e., they are not set together. Further, the base station 30 includes a stake 31, a GPS module 32, and a base 33. The GPS module 32 is detachably connected with the top end of the stake 31, so that the signal generated or obtained by the GPS module 32 is not easily blocked. The base 33 is connected with the bottom end of the stake 31 and provided with a tripod 34 and a ground rod 35 connected with the tripod 34 in this embodiment. In this way, the base 33 provides a good structural stability without tipping through the tripod 34, and the base 33 can be adjusted its position arbitrarily through the ground rod 35 that can be directly inserted in the grass. The GPS module 32 includes a first communication unit 322, a first GPS antenna 324, and a microcontroller 326. The microcontroller 326 is electrically connected with the first communication unit 322 and the first GPS antenna 324 for controlling the operation of the first communication unit 322 and the first GPS antenna 324. In addition, as shown in FIG. 2, the base station 30 further includes a power supply unit 36 disposed to the top end of the stake 31 and electrically connected with the microcontroller 326 for providing power to the microcontroller 326. In this embodiment, the power supply unit 36 is a solar power unit, including a solar panel 37 exposed outside to absorb sunlight and convert the sunlight into electrical energy and store the electrical energy in a storage battery 38 that provides the electrical energy to the microcontroller 326. As such, the base station 30 can generate electricity independently without relying on the external power supply, so the base station 30 is very flexible in use.

As shown in FIG. 2, the mowing robot 40 includes a second communication unit 42 configured to establish a communication connection with the first communication unit 322 of the base station 30. The mowing robot 40 further includes a second GPS antenna 44, and a control unit 46. The control unit 46 is electrically connected with the second communication unit 42 and the second GPS antenna 44 on one hand, and on the other hand, the control unit 46 is connected with the first GPS antenna 324 of the base station 30 in a wireless manner (such as LoRa, Zigbee, Wi-Fi, Bluetooth or a mobile communication network, which is not limited here), such that the control unit 46 receives a first GPS signal obtained by a GPS chip 325 of the first GPS antenna 324 and a second signal obtained by a GPS chip 45 of the second GPS antenna 44 and determines a positioning coordinate of the mower robot 40 according to the first GPS signal and the second GPS signal.

On first use, the charging station 20 is installed in place, and then the mowing robot 40 is placed on the charging station 20 for charging. At this time, the mowing robot 40 sends a signal to the GPS module 32 to obtain the positioning coordinate of the mower robot 40 as a reference for the subsequent calculation of the related position of the mower robot 40. In addition, by means of the communication connection between the first communication unit 322 and the second communication unit 42, when the mowing robot 40 moves to the charging station 20, the control unit 46 determines whether the mowing robot 40 is charging and determines whether the position of the mowing robot 40 is within an error range according to the first GPS signal and the second GPS signal.

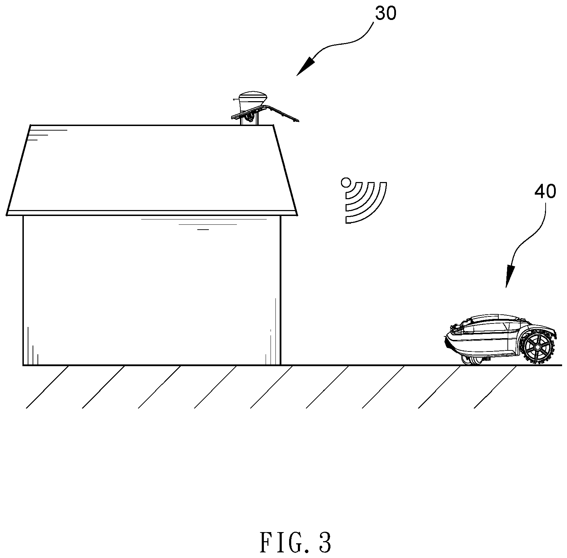

What needs to be added here is that if the location of the GPS module 32 leads to a situation where the signal generated by the GPS module 32 is seriously blocked, the GPS module 32 can be detached from the top end of the stake 31 and installed in a less shaded place (such as a roof shown in FIG. 3) to greatly improve the accuracy of positioning.

As indicated above, the charging station 20 and the base station 30 provided by the mowing system 10 of the present invention are set independently from each other, and further, the base station 30 can generate electricity independently, such that the installation position of the base station 30 is not restricted by the surrounding environment or the charging station 20. Therefore, the base station 30 can be installed in a location with good signal reception to achieve a purpose of enhancing positioning precision.

## Claims

1. A mowing system (10) **characterized in that** comprising:
a charging station (20);
a base station (30) set independently from the charging station (20), the base station (30) including a first communication unit (322) and a first GPS antenna (324); and
a mowing robot (40) including a second communication unit (42) configured to establish a communication connection with the first communication unit (322) of the base station (30), the mowing robot (40) further including a second GPS antenna (44) and a control unit (46) electrically connected with the second GPS antenna (44) and the first GPS antenna (324) to receive a first GPS signal obtained by the first GPS antenna (324) and a second GPS signal obtained by the second GPS antenna (44) and determine a positioning coordinate of the mower robot (40) according to the first GPS signal and the second GPS signal.

2. The mowing system (10) as claimed in claim 1, **characterized in that** the base station (30) further includes a microcontroller (326) electrically connected with the first communication unit (322) and the first GPS antenna (324), and a power supply unit (36) electrically connected with the microcontroller (326).

3. The mowing system (10) as claimed in claim 2, **characterized in that** the base station (30) further includes a stake (31) and a base (33); the first GPS antenna (324) is disposed to a top end of the stake (31); the base (33) is connected with a bottom end of the stake (31).

4. The mowing system (10) as claimed in claim 3, **characterized in that** the base (33) has a tripod (34) and a ground rod (35) connected with the tripod (34).

5. The mowing system (10) as claimed in claim 2, **characterized in that** the power supply unit (36) is a solar power unit, including a solar panel (37) exposed outside and a storage battery (38) electrically connected with the solar panel (37) and the microcontroller (326).

6. The mowing system (10) as claimed in claim 1, **characterized in that** when the mowing robot (40) moves to the charging station (20), the control unit (46) determines whether the mowing robot (40) is charging and determines whether the position of the mowing robot (40) is within an error range.

7. The mowing system (10) as claimed in claim 1, **characterized in that** a wireless transmission method between the control unit (46) and the first GPS antenna (324) is LoRa, Zigbee, Wi-Fi, Bluetooth or a mobile communication network.
